# EUROPEAN PATENT SPECIFICATION

(11) **EP 0 513 539 B1**
(45) Date of publication and mention of the grant of the patent: **03.04.1996**
(21) Application number: 92106516.5
(22) Date of filing: 15.04.1992
(51) Int. Cl.: F25D 29/00, F25D 11/02

(54) **Household appliance with electronic control**
Haushaltsgerät mit elektronischer Steuerung
Appareil ménager avec commande électronique

(30) Priority: 18.04.1991 IT TO910295
(43) Date of publication of application: 19.11.1992
(73) Proprietor: MERLONI ELETTRODOMESTICI S.p.A., I-60044 Fabriano (AN) (IT)
(72) Inventor: Aisa, Valerio, Fabriano (AN) (IT); Dolciotti, Marcello, Maiolati Spontini (AN) (IT); Fontana, Claudio, Arcevia (AN) (IT); Mariani, Pietro, Fabriano (AN) (IT); Possanza, Mauro, Fabriano (AN) (IT)

(56) References cited:
- EP-A- 0 120 490
- EP-A- 0 298 349
- EP-A- 0 383 222
- EP-A- 0 392 521
- DE-A- 1 949 970
- DE-A- 3 837 629
- GB-A- 1 545 594
- GB-A- 2 180 962
- US-A- 4 364 234

## Description

The present invention relates to an electronically controlled electrical household appliance, in particular a refrigerator, according to the preamble of the annexed claim 1.

Electrical household appliances of the type indicated are known, for instance all the modern domestic electronically controlled refrigerators normally comprise a first compartment destined to conserving fresh food and a second compartment destined to freezing and conserving food, a refrigerating circuit comprising a compressor, a first and a second evaporator, arranged respectively in said first and said second compartment, and a condenser; furthermore they are supplied with a temperature sensor in the first compartment (fresh food cell or fridge), in which a manual regulator for regulating the temperature to a preferred value is also supplied, within a field of acceptable values for conserving food; said sensor serves in deactivating the compressor when the temperature within the refrigerator cell has fallen below the value manually applied (+2° for example). It is also known to supply a second sensor to the evaporator of the first compartment, for detecting the instant of activation of the compressor (for example when the plate of the evaporator reaches the temperature of +4°).

The difficulties are known of obtaining an acceptable control of the temperature be it either in the refrigerator cell or the freezer cell, in different environmental conditions that may occur (during the winter or the summer, in northern or southern countries, with the refrigerator in a heated house or situated on a balcony, etc. ).

Moreover the temperature sensor or sensors are subject to alterations or differences of calibration, due to the inevitable production tolerances, for which it is easy to imagine the problems that may follow.

Also other types of electrical household appliances, namely certain types of economic washing machines, that heat the water based on time, are influenced in a determining way by the external conditions, and in particular the temperature of the water, therefore during the summer they excessively heat the water, with a useless consumption of the electrical current, and during the winter there is the risk of washing at a temperature far too low, that may prejudice the washing effect. Also other types of electrical household appliances, namely cooking ovens, or hot water heaters (boilers), evidently are influenced by the external temperature, that affects their functioning.

Even other external conditions, being different from the temperature, can sometimes decisively affect the functioning of electrical household appliances: consider for example dishwashers, of which the hardness of the water drawn is very influential.

From GB-A-2.180.962 a refrigerator is also known, comprising a first compartment, a compressor that can be activated and deactivated, a temperature setting device for manually setting the desired temperature within said first compartment, an electronic digital control device that manages the functioning of the appliance, an external temperature sensor sensitive to the temperature prevailing outside the appliance and connected to said control device.

An aim of the present invention is that to indicate an electrical household appliance, in which, with a relatively simple and inexpensive method, it is possible to take advantage of the electronic control for maintaining in an excellent way the operative conditions applied by means of the manual device.

It is also an aim of the present invention to indicate how it is possible to guarantee acceptable results even in cases of alterations or failures of one of the components of the system; and to facilitate the identification of the abnormal functioning and the diagnosis of the present failure.

In the particular case of a domestic refrigerator, the aim is to maintain, with minimum waste, within the compartment of the fresh food the temperature applied by means of the manual device, and to maintain within the freezer compartment a temperature inferior to that of -18°, in a field of external temperature ranging from +10° to +40°.

In allowing for such aims the present invention has as its object an electronically controlled electrical household appliance, having the features of the annexed claim 1; further advantageous embodiments of the invention are then indicated in the dependent claims 2 to 27.

Further aims and advantages of the present invention will become clear from the following detailed description and annexed drawings supplied as a non-limiting example, wherein:
- figure 1 schematically represents the refrigerator according to the invention;
- figure 2 schematically represents the command panel of the refrigerator of figure 1;
- figure 3 schematically represents a significant part of the logic flow of the control device of the refrigerator according to the invention;
- figure 4 schematically represents a further significant part of the logic flow of the control device of the refrigerator according to the invention.

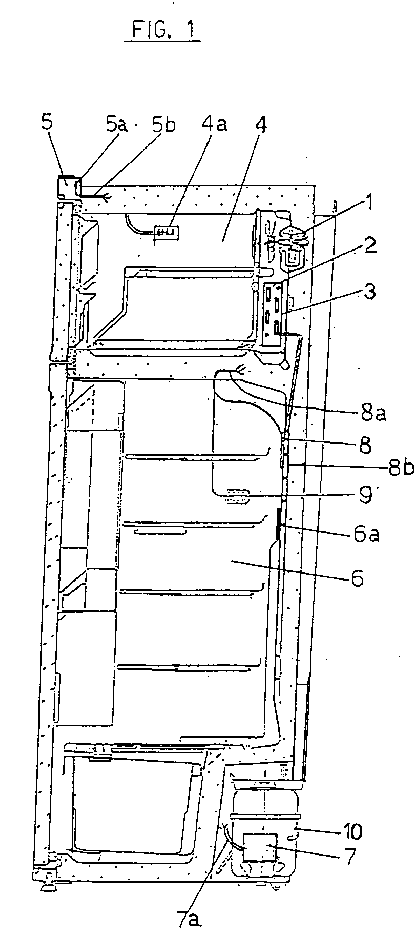

In figure 1, that schematically represents the refrigerator according to the invention, with reference number 6 the first compartment (refrigerating cell) is indicated; reference number 4 indicates a second compartment (freezer cell); the reference number 1 indicates a motor ventilator; reference number 2 indicates the evaporator of the freezer compartment; the reference number 3 indicates a defrosting resistance, situated in the freezer compartment; the reference number 4a indicates a temperature sensor arranged in the freezer compartment.

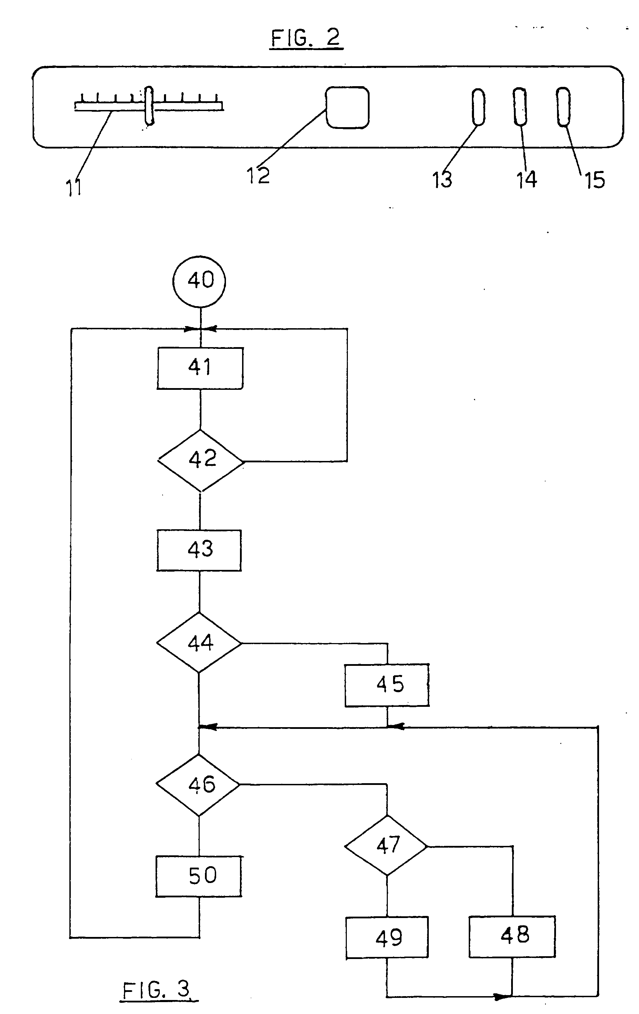

The reference number 5 indicates the command panel of the refrigerator, containing a part of the electronic control device of the functioning of the refrigerator, more precisely the so called "user interface", consisting of a stamped circuit card on which the following are welded (see figure 2):
- a power-meter slider 11, that has the task of arranging for the desired temperature within the refrigerator compartment;
- a key 12, that has the task of activating the fast freezing function; and
- three luminous bars, a red one (13), that serves as an alarm signal, a green one (14) , that serves as a normal functioning indicator, and a yellow one (15°), that serves in signalling the activation of the fast freezing function.

The three indicators also have the purpose of communicating, according to a special procedure, that will be described later, information on the operative conditions of the appliance.

On the interface card, the external temperature sensor is also welded, indicated with the reference number 5a; the reference number 5b indicates a nine wired cable that connects the interface cable with the second part of the control device, that is situated towards the bottom and is indicated with the reference number 7.

The second part 7 of the control device (the actual control card) contains a supply circuit, a micro-controller and four power actuators and precisely three electromechanical relays, that have the purpose of controlling the activation/deactivation of the compressor (indicated with the reference number 10), of the freezer thawing resistance 3 and of the motor ventilator 1; and an optotriac, for example of the MOC3020, that has the purpose of controlling the activation/deactivation of a heating resistance, indicated with the reference number 6a, situated in the refrigerator compartment.

All of these actuators are controlled by the device 7.

The reference number 8b indicates the evaporator of the refrigerator compartment; the reference number 8 indicates a sensor that measures the temperature of the evaporator of the refrigerator compartment; the reference number 9 indicates a second sensor that measures the temperature of the air of the same compartment; both of the sensors are connected to the device 7 by means of the cable 8a.

In the figure 2, as mentioned above, an aspect of the command panel of the refrigerator is schematically represented, that presents a power meter slider 11 for the arranging of the temperature within the refrigerator compartment, a key 12 for activating the fast freezing and three visual indicating luminous bars 13, 14 and 15, respectively of the colours red green and yellow.

The functioning of the described refrigerator is the following. The micro-controller contained on the principle control card (7), by means of the sensor (9) of the air of the refrigerator cell (6) manages the thermostatic regulation of the refrigerator compartment, providing, through the appropriate relay, to deactivate the compressor (10) as soon as the temperature detected by the sensor 9 reaches the inferior temperature value allowed, that is supplied by the user through the power meter slider 11, that allows for choosing between the 8 different levels of cold.

The same micro-controller then provides for activating the compressor 10 as soon as a pre-fixed interval of time has passed (for example 20 minutes), from the deactivation; this system (fixed deactivation time) makes easier the control of the functioning ratio (ratio between activation time and total time), avoiding that the micro-controller carries out divisions.

Each time that the sum of activation times of the compressor reaches a determined value (for example 5 hours), a defrosting of the refrigerator compartment is carried out, i.e. the compressor is inactive until the temperature detected by the sensor (8), arranged on the evaporator of the refrigerator compartment, results in being equal to +4°C.

The freezer compartment is of the "no frost" type, i.e. a ventilator is internally present (1) that circulates cold air coming from the evaporator 2; in eliminating the ice accumulated on the evaporator 2, defrostings of the freezer are provided, that are effected by activating the resistance 3; a bimetal, not indicated in the figure, deactivates the resistance when the evaporator has reached a temperature sufficient in guaranteeing a total defrosting.

The interval between a defrosting of the freezer and a successive one is calculated with an appropriate algorithm, based on the duration of the last defrosting: the harder the defrosting the less the interval to the successive defrosting (system of the adaptive type). The micro-controller is associated to a non volatile digital memory, that can be a normal read only memory (ROM), in which its operative instructions are contained; in the same memory a series of tables are contained that place in relation the duration of the defrosting with the successive intervention.

In a version of the refrigerator according to the invention the ROM memory also contains a table in which the optimal values of the reference parameters of the regulation, are contained in particular the optimum of the calibration threshold used for the thermostatic regulation of the refrigerator; in this version the value of the inferior temperature allowed in the refrigerator compartment is selected by the control system based on the value indicated by the user by means of the power meter slider 11, that allows for choosing between 8 different cold levels, and based on the value taken from external temperature. The micro controller carries out such dynamic corrections of the calibration of the sensor 9 in function of the external temperature utilising experimental values contained in the table inserted in the non volatile memory.

With the aim of avoiding excessively long pauses, that could cause an excessive heating of the freezer, overlapping of a freezer defrosting with a defrosting of the refrigerator is prevented; in cases of overlapping, priority is given to the defrosting of the freezer; the defrosting of the refrigerator is carried out later as soon as the freezer has recuperated its coldness.

In the presence of low external temperatures (less than 16°C), it can occur that the temperature in the freezer cell 4, detected by the sensor 4a tends to increase over the limited pre-fixed temperature of -18°C; in such a case, the micro controller provides for activating the heating resistance 6a of the refrigerator cell 6 so as to re-establish the desired balance between the temperature in the two refrigerator and freezer cells and to maintain the compressor 10 active until the temperature within the freezer cell descends to below the said limit.

The resistance 6a is activated by means of the appropriate key 12. It is here to indicate that at the beginning of each rapid freeze a defrosting of the freezer is carried out; several seconds after depressing the key 12, upon the beginning of the defrosting, the green led 14 starts to flash, to indicate that the system is about to arrange for generating the maximum cold; after that, the defrosting has terminated, the compressor will be continuously activated for a length of time sufficient for recuperating the coldness of the freezer (normally 45 minutes), the green led will stop flashing, to indicate that the freezing phase has effectively started.

The micro controller is informed of the external temperature by means of the temperature sensor 5a welded to the interface card; in the ROM to which it is associated a series of tables are contained, that indicate, for all the steps of the external temperature values (detected by the sensor 5a), of four degrees in four degrees centigrade (in the field of temperature comprised between +9°C and +41°C), and for every position of the power-meter 11, the optimal of the functional ratio (activation/deactivation) of the compressor and the optimal value of the turning off temperature of the compressor detected by the sensor 9.

The tables are therefore eight (one for every step of the external temperature); each table indicates, in correspondence to the eight possible positions of the power-meter 11, the optimal value of activation time of the compressor (as mentioned above, as the deactivation time is fixed, it is not necessary to calculate the ratio and that of the turning off Temperature of the compressor); the values arranged in the tables are obtained by experimental surveys carried out on a sample of perfectly functional significant prototypes according to project specifications.

In such a way the micro controller, has at its disposal more information than strictly necessary (external temperature), and has at its disposal information taken from experience (tables in ROM), it is able to carry out a dynamic correction of the temperature threshold of the turning off of the compressor in such a way that, upon varying external temperatures, the constant internal temperature of the refrigerator is always guaranteed, and moreover it is able to, by means of the knowledge of the optimal value of the functional ratio of the compressor to constantly verify whether everything is in order, and, in the contrary case, to carry out a diagnosis of the eventual abnormality, that could be due to for example the incorrect calibration of one or more sensors, or of other factors. In such circumstances, whenever the deviation exceeds a determined value, an automatic alarm indicator (for instance through use of flashing one or all three of the three luminous indicators) can be provided, so as to allow for a rapid intervention on behalf of the technical assistance before the situation becomes worse, or that damages occur.

The diagnosis of failures is made possible by the fact that the ROM memory contains a series of numeric failure codes, each being associated to a combination of values of the deviation of the real functioning ratio with respect to those optimal and of the other parameters in play, such as the external temperature and the position of the manual regulation device 11.

The failure code is accessible to the technician, or even to the user, that can communicate the code by telephone to the assistance service, thus facilitating the task.

Keeping depressed for a determined period (for example 5 seconds) the rapid freeze key, an auto-diagnostic program is activated.

Such a program lights for a second all three of the luminous bars, thus informing the user that the request for auto-diagnosis has been received; the failure code is then displayed, always by means of the three luminous bars, according to the following procedure: the three bars effect in sequence (first the red, then the green, then the yellow) a number of variable flashes from 1 to 3; in this way 27 different codes can be communicated (three digits in base 3), from 111 to 333, more than sufficient for describing the possible malfunctions of the system.

With an analogous system the temperatures read by the four sensors can also be communicated: the red bar 13 serves in indicating the temperature sign (on, negative sign; off, positive sign); the green bar 14 indicates, with its number of flashes, the number of tens; the yellow light indicates, with its number of flashes, the number of units.

For obtaining the temperature display a combination of operations is necessary, for example by depressing the key and simultaneously positioning the power-meter to the maximum position and then to the minimum; such combination is obviously reserved for technicians in the act of repairing.

The system will then respond by flashing briefly all three of the luminous bars.

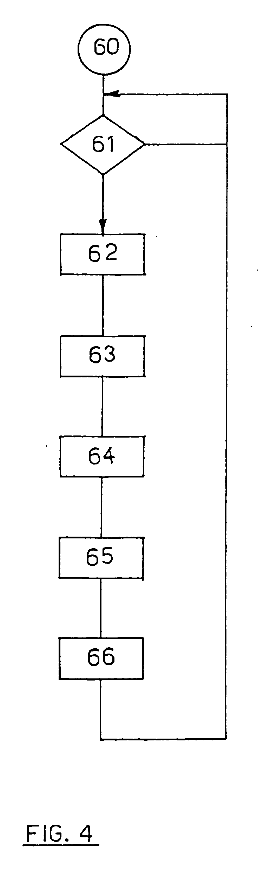

For a major understanding a description of the behaviour of the control device 7 will now be made with reference to figures 3 and 4.

In figure 3, that schematically represents a significant part of the logic flow of the control device of the refrigerator according to the invention (and in particular being relative to the thermostatic regulation of the refrigerating cell 6), with reference number 40 the starting block of the logic flow is indicated; such starting point for example, in the present case, could be that which occurs the first time that the refrigerator is put to use.

Block 40 activates the compressor 10 and passes control to the successive block 41.

Block 41 provides for setting to zero an internal clock and passes control to block 42.

Block 42 is a test block, it verifies whether the temperature detected by the sensor 9 is inferior to that established by means of the manual regulator 11; in the positive case (YES output) control passes to the successive block 43; in the negative case (NO output) control passes back to block 41. In this, as in all the test blocks of the present figure and of figure 4, the YES outputs are represented at the inferior part of the test block, while the NO outputs are represented laterally.

Block 43 provides for deactivating the compressor 10; reads what is displayed on the clock and memorises it in an internal register; sets the clock to zero and passes the control to block 44.

Block 44 is a test block that verifies whether the difference between the duration memorised in said internal register and that corresponding to the table contained in the ROM is minor to a pre-fixed value; in the positive case control passes to block 46; in the negative case control passes to block 45.

Block 45 provides for activating the alarm signal, by flashing simultaneously the three luminous indicators and passes the control to block 46.

Block 46 is a test block, it verifies on the clock whether a determined length of time has passed (for example 20 minutes) from the deactivation of the compressor 10; in the positive case control passes to block 50; in the negative case control passes to block 47.

Block 47 is a test block, which verifies whether the temperature within the freezer cell is inferior to -18°C; in the positive case control passes to block 49; in the negative case control passes to block 48.

Block 48 provides for deactivating the heating resistance 6a, in the case it is activated; control then passes back to block 46.

Block 50 provides for activating the compressor 10 and passes the control back to block 41.

In figure 4, that schematically represents a further significant part of the logic flow of the control device of the refrigerator according to the invention, and in particular that being relative to the auto-diagnosis program, block 60 represents the starting block of the function; block 60 passes control to the successive block 61.

Block 61 is a test block, it verifies whether key 12 has been depressed for at least 5 seconds; in the positive case control passes to block 62; in the negative case control returns to block 61.

Block 62 provides for lighting for a second the three luminous bars and passes the control to the successive block 63.

Block 63 provides for reading in the third internal register the value of the activation/deactivation ratio of the compressor 10, to compare it with that indicated in the internal tables of the operative ROM, in correspondence of the value detected by the external sensor 5A and of that established by the manual regulator 11, and to read in the appropriate operative ROM table the failure code corresponding to the resulting difference; such code is memorised in a fourth internal register and the control is passed to the successive block 64.

Block 64 provides for making the red indicator 13 carry out a given number of flashes corresponding to the first digit of the failure code contained within the fourth internal register; control then passes to block 66.

Block 66 provides for making the yellow indicator 14 carry out a given number of flashes corresponding to the third digit of the failure code contained within the fourth internal register; control then passes back to block 61.

The advantages of the electrical household appliance object of the present invention are, in particular, the following:
- the invariableness and stability of the temperature maintained in the refrigerator cell, corresponding to that manually established by the user;
- the maintaining of the temperature within the freezer cell constantly under -18°C, independently from the external temperature;
- control and assistance facilitated due to the advanced auto-diagnosis program contained in the ROM associated to the micro-controller;
- possibility of timely alarm indications, in the presence of abnormal functioning, otherwise not easily detectable by the user.

It is clear that numerous variants are possible by the man skilled in the art, to the appliance described as an example.

As an example it is cited that, instead of being based on the indication of the refrigerator air sensor for carrying out the thermostatic regulation, the micro-controller is based on the indication of the external sensor, and uses the internal sensor as a control.

The non volatile memory could be, at least in part, of the read and write type (EEPROM), thus enabling it to memorise functioning data (effective compressor activation/deactivation ratios), so as to be able to then communicate them upon request.

The display system of the failure codes could also be different from that indicated as an example.

## Claims

1. Electronically controlled electrical household appliance, in particular a refrigerator, comprising a first compartment (6), a compressor (10) that can be activated and deactivated, a temperature setting device (11) for manually setting the desired temperature within said first compartment (6), an electronic digital control device (7) that manages the functioning of the appliance, an external temperature sensor (5a) sensitive to the temperature prevailing outside the appliance and connected to said control device (7), characterised by the fact that the control device (7) is associated to a non volatile memory (for example a ROM), in which tables are contained, indicating, for every position of the temperature setting device (11) and for every value supplied by the external sensor (5a) and comprised in a prefixed field of values (for instance +9°/+41°), the optimal value of the duration of activation of said compressor (10).

2. Electrical household appliance, according to claim 1, characterised by the fact that said sensor (5a) is externally arranged regards the appliance.

3. Electrical household appliance, according to claim 1 or 2, characterised by the fact that said control device (7) comprises circuitry means (44) for verifying whether the duration of activation of said compressor (10) is different, with respect to that being optimal indicated by said tables, of a quantity being greater than a pre-fixed one, and means (45) for activating, in the positive case, an alarm indication.

4. Electrical household appliance, according to claim 3, characterised by the fact that said alarm indication is a luminous indication produced by a display device (13, 14, 15).

5. Electrical household appliance, according to claim 1 or 2, characterised by the fact that said control device (7), in following a command externally received, provides in determining the difference between the effective duration of activation of said compressor (10) and the optimal one indicated by said tables, and to read a corresponding failure code contained in said non volatile memory.

6. Electrical household appliance, according to claim 5, characterised by the fact that said control device (7) provides for displaying said failure code by means of display devices (13, 14, 15).

7. Electrical household appliance, according to claim 6, characterised by the fact that each digit of said failure code is displayed by means of flashing, repeated a given number of times being equal to said digit, of a determined luminous device (13, 14, 15).

8. Electrical household appliance, according to one or more of the previous claims, characterised by the fact that it is a refrigerator, in which said first compartment (6) is the compartment destined to conserve fresh food.

9. Electrical household appliance, according to claim 8, characterised by the fact that it comprises also a second compartment (4) destined to the freezing and conserving of food, a first evaporator (8b) situated in said first compartment (6), a second evaporator (2) situated in said second compartment (4), a temperature sensor (9) for measuring the temperature relating to said first compartment (6), and a temperature sensor (8) for measuring the temperature of said first evaporator (8b).

10. Electrical household appliance, according to claim 9, characterised by the fact that said refrigerator also comprises a treating resistance (6a) situated in said first compartment (6) and a temperature sensor (4a) situated in said second compartment (4).

11. Electrical household appliance, according to claim 9, characterised by the fact that said control device (7) comprises circuitry means (42, 43) for deactivating said compressor (10) when the temperature detected by said temperature sensor (9) associated to said first compartment (6) is minor to or equal to the temperature established by the manual regulating device (11).

12. Electrical household appliance, according to claim 11, characterised by the fact that said control device (7) comprises circuitry means (46, 50) for activating said compressor (10) when a period of time determined by its activation has passed.

13. Electrical household appliance, according to claim 9, characterised by the fact that said control device (7) comprises circuitry means for activating said compressor (10) when the temperature detected by said sensor (8) associated to said first evaporator (8b) is minor to or equal to a pre-fixed temperature (for example +4°C).

14. Electrical household appliance, according to claim 10, characterised by the fact that said control device (7) comprises circuitry means (47, 48) for activating said resistance (6a) when the temperature detected by said sensor (4a) associated to said second compartment (4) is major to or equal to a pre-fixed temperature (for example -18°C).

15. Electrical household appliance, according to at least one of the previous claims, characterised by the fact that it comprises three functional luminous indicators, a red one (13), a green one (14) and a yellow one (15).

16. Electrical household appliance, according to claim 3, characterised by the fact that said alarm indication is obtained by making three indicators of the refrigerator's functioning (13, 14, 15) flash simultaneously.

17. Electrical household appliance, according to claim 5, characterised by the fact that each digit of said failure code is displayed through flashing, repeated a number of times being equal to said digit, of one of three indicators of the refrigerator's functioning (13, 14, 15).

18. Electrical household appliance, according to at least one of the previous claims, characterised by the fact that said temperature setting device (11) comprises a power-meter of the linear type, otherwise called slider (11).

19. Electrical household appliance, according to at least one of the previous claims, characterised by the fact that said control device (7) comprises a micro-controller.

20. Electrical household appliance, according to claim 8, characterised by the fact that said control device (7) is provided for activating said compressor (10) based on the information supplied by said external sensor (5a) and on the tables contained in said non volatile memory, and for controlling whether the internal temperature of said first compartment (6) remains equal to or inferior to that established by means of said temperature setting device (11).

21. Electrical household appliance, according to at least one of the previous claims, characterised by the fact that said non volatile memory, associated to said control device (7) is, at least in part, of the read write type (EEPROM), so as to be able to memorise functional data, and communicate it upon request.

22. Electrical household appliance, according to at least one of the previous claims, characterised by the fact that it comprises a key (12) for commanding the beginning of a fast freezing phase and a luminous indicator (14).

23. Electrical household appliance, according to claims 9 and 22, characterised by the fact that said fast freezing phase starts with a defrosting of the second compartment (4) and that said luminous indicator (14) starts to flash in concomitance with the beginning of said defrosting and passes to a steady light only upon termination of the defrosting and after that a determined interval of time has passed from the activation of said compressor (10), such interval being sufficient to allow said second compartment (4) to recuperate the normal level of cold.

24. Electrical household appliance, according to claim 10, characterised in that it comprises
- a refrigerating circuit comprising the compressor (10), the first (8b) and the second evaporator (2), respectively arranged in said first (6) and said second compartment (4), and a condenser,
- said four temperature sensors (5a, 9, 8, 4a)
whereby said control device (7) provides for continuously elaborating the information of the four sensors (9, 8, 4a, 5a) and of the manual regulating device (11), and acting on the activation times of said compressor (10) and of said heating element (6a), so as to maintain substantially stable and invariable the temperature of the first compartment (6), established by means of the manual regulating device (11), independently from the external temperature value, and to simultaneously maintain in the second compartment (4) a temperature being inferior to a pre-fixed temperature value (for example -18° C).

25. Electrical household appliance, according to claim 1, characterised by the fact that, in said non volatile memory, there are also contained tables indicating the optimal value of the reference parameters of the temperature regulation.

26. Electrical household appliance, according to claim 25, characterised by the fact that said reference parameters of the regulation comprise the calibration threshold used for the thermostatic regulation of the refrigerator.

27. Electrical household appliance, according to claims 19 and 26, characterised by the fact that the micro-controller is apt at carrying out a dynamic correction of the temperature threshold for turning off the compressor so as that, upon variations of the external temperature, a constant internal temperature of the refrigerator is always guaranteed.

## Patentansprüche

1. Elektronisch kontrolliertes Haushaltsgerät, insbesondere Kühlschrank, umfassend ein erstes Abteil (6), einen Kompressor (10), welcher aktiviert und deaktiviert werden kann, eine Temperatureinstelleinrichtung (11) zum manuellen Einstellen der gewünschten Temperatur innerhalb des ersten Abteils (6), eine digitale elektronische Kontrolleinrichtung (7), welche das Betreiben des Haushaltsgeräts steuert, einen externen Temperatursensor (5a), der empfindlich auf die Temperatur ist, welche außerhalb des Haushaltsgeräts vorherrscht, und mit der Kontrolleinrichtung (7) verbunden ist, **dadurch gekennzeichnet**, daß der Kontrolleinrichtung (7) ein nichtflüchtiger Speicher (z. B. ein ROM) zugeordnet ist, in welchem Tabellen enthalten sind, welche für jede Einstellung der Temperatureinstelleinrichtung (11) und für jeden Wert, der von dem externen Sensor (5a) geliefert wird und innerhalb eines vorbestimmten Feldes von Werten (z. B. +9°/+41°) liegt, den optimalen Wert der Aktivierungsdauer des Kompressors (10) angeben.

2. Elektrisches Haushaltsgerät nach Anspruch 1, **dadurch gekennzeichnet**, daß der Sensor (5a) außerhalb des Haushaltsgeräts angeordnet ist.

3. Elektrisches Haushaltsgerät nach Anspruch 1 oder 2, **dadurch gekennzeichnet**, das die Kontrolleinrichtung (7) Schaltmittel (44) zum Überprüfen, ob die Aktivierungsdauer des Kompressors (10) von der durch die Tabellen als optimal angegebenen um mehr als einen vorbestimmten Wert abweicht, und Mittel (45) zum Aktivieren einer Alarmanzeige im positiven Fall umfaßt.

4. Elektrisches Haushaltsgerät nach Anspruch 3, **dadurch gekennzeichnet,** daß die Alarmanzeige eine Leuchtanzeige ist, die durch eine Anzeigeeinrichtung (13, 14, 15) bewirkt wird.

5. Elektrisches Haushaltsgerät nach Anspruch 1 oder 2, **dadurch gekennzeichnet**, daß die Kontrolleinrichtung (7) in Ausführung eines Kommandos welches sie von außen erhalten hat, das Feststellen der Abweichung zwischen der effektiven Aktivierungsdauer des Kompressors (10) und der durch die Tabellen angegebenen optimalen Aktivierungsdauer und das Auslesen eines korrespondierenden Fehlercodes, der in dem nichtflüchtigen Speicher enthalten ist, bewirk.

6. Elektrisches Haushaltsgerät nach Anspruch 5, **dadurch gekennzeichnet**, daß die Kontrolleinrichtung (7) die Anzeige des Fehlercodes über die Anzeigeeinrichtungen (13, 14, 15) bewirkt.

7. Elektrisches Haushaltsgerät nach Anspruch 6, **dadurch gekennzeichnet,** daß jede Ziffer des Fehlercodes durch Blinken einer vorbestimmten Leuchteinrichtung (13, 14, 15) angezeigt wird, wobei das Blinken so oft wiederholt wird, wie es dem Wert der Ziffer entspricht.

8. Elektrisches Haushaltsgerät nach einem oder mehreren der vorhergehenden Ansprüche, **dadurch gekennzeichnet,** daß es ein Kühlschrank ist, in welchem das erste Abteil (6) das Abteil ist, welches zur Konservierung frischer Lebensmittel bestimmt ist,

9. Elektrisches Haushaltsgerät nach Anspruch 8, **dadurch gekennzeichnet,** daß es auch ein zweites Abteil (4), welches zum Einfrieren und Aufbewahren von Lebensmitteln bestimmt ist, einen ersten Verdampfer (8b), der in dem ersten Abteil (6) angeordnet ist, einen zweiten Verdampfer (2), der in dem zweiten Abteil (4) angeordnet ist, einen Temperatursensor (9) zum Messen der Temperatur, welche dem ersten Abteil (6) zugeordnet ist, und einen Temperatursensor (8) zum Messen der Temperatur besagten des Verdampfers (8b) umfaßt.

10. Elektrisches Haushaltsgerät nach Anspruch 9, **dadurch gekennzeichnet**, daß der Kühlschrank auch einen Heizwiderstand (6a), welcher in dem ersten Abteil (6) angeordnet ist, und einen Temperatursensor (4a), welcher in dem zweiten Abteil (4) angeordnet ist, umfaßt.

11. Elektrisches Haushaltsgerät nach Anspruch 9, **dadurch gekennzeichnet**, daß die Kontrolleinrichtung (7) Schaltmittel (42, 43) zum Deaktivieren des Kompressors (10) umfaßt, wenn die Temperatur, die durch den Temperatursensor (9) gemessen wird, der dem ersten Abteil (6) zugeordnet ist, kleiner oder gleich der Temperatur ist, die durch die manuelle Einstelleinrichtung (11) vorgegeben ist.

12. Elektrisches Haushaltsgerät nach Anspruch 11, **dadurch gekennzeichnet**, daß die Kontrolleinrichtung (7) Schaltmittel (46, 50) zum Aktivieren des Kompressors (10) umfaßt, wenn eine Zeitspanne, welche durch seine Aktivierung bestimmt ist, verstrichen ist.

13. Elektrisches Haushaltsgerät nach Anspruch 9, **dadurch gekennzeichnet**, daß die Kontrolleinrichtung (7) Schaltmittel zum Aktivieren des Kompressors (10) umfaßt, wenn die Temperatur, welche durch den Sensor (8) detektiert wird, der dem ersten Verdampfer (8b) zugeordnet ist, kleiner oder gleich einer vorbestimmten Temperatur (z. B. +4°C) ist.

14. Elektrisches Haushaltsgerät nach Anspruch 10, **dadurch gekennzeichnet**, daß die Kontrolleinrichtung (7) Schaltmittel (47, 48) zum Aktivieren des Widerstandes (6a) aufweist, wenn die Temperatur, welche durch den Sensor (4a) detektiert wird, der dem zweiten Abteil (4) zugeordnet ist, größer oder gleich einer vorbestimmten Temperatur (z. B. -18°C) ist.

15. Elektrisches Haushaltsgerät nach mindestens einem der vorhergehenden Ansprüche, **dadurch gekennzeichnet,** daß es drei Funktionsleuchtanzeigen umfaßt, nämlich eine rote (13), eine grüne (14) und eine gelbe (15).

16. Elektrisches Haushaltsgerät nach Anspruch 3, **dadurch gekennzeichnet**, daß die Alarmanzeige dadurch erreicht wird, daß drei Anzeigen (13, 14, 15) für die Kühlschrankfunktion gleichzeitig blinken.

17. Elektrisches Haushaltsgerät nach Anspruch 5, **dadurch gekennzeichnet**, daß jede Ziffer des Fehlercodes durch Blinken von einer der drei Anzeigen (13, 14, 15) für den Kühlschrankbetrieb angezeigt wird, wobei das Blinken so oft wiederholt wird, wie es der besagten Ziffer entspricht.

18. Elektrisches Haushaltsgerät nach mindestens einem der vorhergehenden Ansprüche, **dadurch gekennzeichnet**, daß die Temperatureinstelleinrichtung (11) ein Linearpotentiometer umfaßt, sonst Schleifer (11) genannt,

19. Elektrisches Haushaltsgerät nach mindestens einem der vorhergehenden Ansprüche, **dadurch gekennzeichnet**, daß die Kontrolleinrichtung (7) einen Mikrocontroller umfaßt.

20. Elektrisches Haushaltsgerät nach Anspruch 8, **dadurch gekennzeichnet**, daß die Kontrolleinrichtung (7) zum Aktivieren des Kompressors (10) auf der Basis der Information, welche durch den externen Sensor (5a) geliefert wird, und der Tabellen, welche in besagtem nichtflüchtigen Speicher enthalten sind, und zum Kontrollieren, ob die interne Temperatur des ersten Abteils (6) kleiner oder gleich der Temperatur bleibt, welche mittels der Temperatureinstelleinrichtung (11) vorgegeben ist, vorgesehen ist.

21. Elektrisches Haushaltsgerät nach mindestens einem der vorhergehenden Ansprüche, **dadurch gekennzeichnet**, daß der nichtflüchtige Speicher, der der Kontrolleinrichtung (7) zugeordnet ist, zumindest teilweise ein elektrisch lösch- und überschreibbarer Speicher (EEPROM) ist, so daß er in der Lage ist, Betriebsdaten zu speichern und sie auf Anforderung wieder auszugeben.

22. Elektrisches Haushaltsgerät nach mindestens einem der vorhergehenden Ansprüche, **dadurch gekennzeichnet,** daß es eine Taste (12) zum Auslösen des Beginns einer Schnellfrierphase und eine Leuchtanzeige (14) umfaßt.

23. Elektrisches Haushaltsgerät nach den Ansprüchen 9 und 22, **dadurch gekennzeichnet**, daß besagte Schnellfrierphase mit einem Abtauen des zweiten Abteils (4) beginnt und daß die Leuchtanzeige (14) als Begleiterscheinung mit dem Anfang der Abtauphase zu blinken beginnt und erst dann zu permanentem Leuchten überwechselt, wenn das Abtauen beendet ist und nachdem ein vorbestimmtes Zeitintervall seit der Aktivierung des Kompressors (10) vergangen ist, wobei das Intervall hinreichend lang ist, um dem zweiten Abteil zu ermöglichen, sein normales Kälteniveau wieder zu erlangen.

24. Elektrisches Haushaltsgerät nach Anspruch 10, **dadurch gekennzeichnet**, daß es umfaßt
- einen Kühlkreislauf, welcher den Kompressor (10), den ersten (8b) und den zweiten Verdampfer (2), welche in dem ersten (6) und dem zweiten Abteil (4) angeordnet sind, und einen Kondensator umfaßt,
- besagte vier Temperatursensoren (5a, 9, 8, 4a),
- wobei die Kontrolleinrichtung (7) die kontinuierliche Auswertung der Information der vier Sensoren (9, 8, 4a, 5a) und der manuellen Reguliereinrichtung (11) und das Auslösen der Aktivierungszeiten des Kompressors (10) und des Heizelements (6a) bewirkt, um die Temperatur des ersten Abteils (6) im wesentlichen stabil und unveränderlich aufrechtzuerhalten, welche mittels der manuellen Reguliereinrichtung (11) vorgegeben ist, unabhängig von dem externen Temperaturwert, und um gleichzeitig im zweiten Abteil (4) eine Temperatur unterhalb eines vorgegebenen Temperaturwerts (z. B. -18°C). aufrechtzuerhalten.

25. Elektrisches Haushaltsgerät nach Anspruch 1, **dadurch gekennzeichnet**, daß in besagtem nichtflüchtigen Speicher auch Tabellen enthalten sind, welche die optimalen Werte der Referenzparameter der Temperaturregelung anzeigen.

26. Elektrisches Haushaltsgerät nach Anspruch 25, **dadurch gekennzeichnet**, daß besagte Referenzparameter der Regelung den Kalibrierungsschwellwert umfassen, der zur thermostatischen Regelung des Kühlschranks verwendet wird.

27. Elektrisches Haushaltsgerät nach den Ansprüchen 19 und 26, **dadurch gekennzeichnet**, daß der Mikrocontroller geeignet ist eine dynamische Korrektur des Temperaturschwellwerts zum Ausschalten des Kompressors (10) durchzuführen, so daß auch bei Variation der äußeren Temperatur eine konstante innere Temperatur des Kühlschranks stets garantiert ist.

## Revendications

1. Appareil électrique ménager commandé électroniquement, et notamment un réfrigérateur, comprenant un premier compartiment (6), un compresseur (10) qui peut être activé et désactivé, un dispositif (11) de réglage de température destiné à régler manuellement la température voulue dans le premier compartiment (6), un dispositif numérique électronique (7) de commande qui gère le fonctionnement de l'appareil, un capteur (5a) de la température extérieure sensible à la température existant à l'extérieur de l'appareil et connecté au dispositif de commande (7), caractérisé par le fait que le dispositif de commande (7) est associé à une mémoire permanente (par exemple une mémoire ROM) dans laquelle sont logées des tables indiquant, pour chaque position du dispositif (11) de réglage de température et pour chaque valeur transmise par le capteur externe (5a) et contenue dans un domaine préalablement fixé de valeurs (par exemple +9°/+41°), la valeur optimale de la durée d'activation du compresseur (10).

2. Appareil électrique ménager selon la revendication 1, caractérisé par le fait que le capteur (5a) est disposé à l'extérieur de l'appareil.

3. Appareil électrique ménager selon la revendication 1 ou 2, caractérisé par le fait que le dispositif de commande (7) comporte un circuit (44) de vérification du fait que la durée d'activation du compresseur (10) est différente, par rapport à celle qui est optimale comme indiqué par les tables, d'une quantité supérieure à une quantité préalablement fixée, et un dispositif (45) d'activation d'une indication d'alarme en présence de ce fait.

4. Appareil électrique ménager selon la revendication 3, caractérisé par le fait que l'indication d'alarme est une indication lumineuse produite par un dispositif d'affichage (13, 14, 15).

5. Appareil électrique ménager selon la revendication 1 ou 2, caractérisé par le fait que le dispositif de commande (7), à la suite de la réception d'une commande de l'extérieur, assure la détermination de la différence entre la durée effective d'activation du compresseur (10) et la valeur optimale indiquée par les tables, avec lecture d'un code correspondant de panne contenu dans la mémoire permanente.

6. Appareil électrique ménager selon la revendication 5, caractérisé par le fait que le dispositif de commande (7) assure l'affichage du code de panne à l'aide de dispositifs d'affichage (13, 14, 15).

7. Appareil électrique ménager selon la revendication 6, caractérisé par le fait que chaque chiffre du code de panne est affiché par clignotement, répété un nombre déterminé de fois égal au chiffre, d'un dispositif lumineux déterminé (13, 14, 15).

8. Appareil électrique ménager selon une ou plusieurs des revendications précédentes, caractérisé par le fait qu'il constitue un réfrigérateur dans lequel le premier compartiment (6) est le compartiment destiné à conserver les aliments frais.

9. Appareil électrique ménager selon la revendication 8, caractérisé par le fait qu'il comprend aussi un second compartiment (4) destiné à la congélation et à la conservation d'un aliment, un premier évaporateur (8b) placé dans le premier compartiment (6), un second évaporateur (2) placé dans le second compartiment (4), un capteur (9) de température destiné à mesurer la température relative au premier compartiment (6), et un capteur (8) de température destiné à mesurer la température du premier évaporateur (8b).

10. Appareil électrique ménager selon la revendication 9, caractérisé par le fait que le réfrigérateur comporte aussi une résistance de chauffage (6a) placée dans le premier compartiment (6) et un capteur de température (4a) placé dans le second compartiment (4).

11. Appareil électrique ménager selon la revendication 9, caractérisé par le fait que le dispositif de commande (7) comporte un circuit (42, 43) destiné à désactiver le compresseur (10) lorsque la température détectée par le capteur de température (9) associé au premier compartiment (6) est inférieure ou égale à la température établie par le dispositif de régulation manuelle (11).

12. Appareil électrique ménager selon la revendication 11, caractérisé par le fait que le dispositif de commande (7) comporte un circuit (46, 50) d'activation du compresseur (10) lorsqu'une période déterminée par son activation s'est écoulée.

13. Appareil électrique ménager selon la revendication 9, caractérisé par le fait que le dispositif de commande (7) comporte un circuit d'activation du compresseur (10) lorsque la température détectée par le capteur (8) associé au premier évaporateur (8b) est inférieure ou égale à une température préalablement fixée (par exemple +4 °C).

14. Appareil électrique ménager selon la revendication 10, caractérisé par le fait que le dispositif de commande (7) comporte un circuit (47, 48) d'activation de la résistance (6a) lorsque la température détectée par le capteur (4a) associé au second compartiment (4) est supérieure ou égale à une température préalablement fixée (par exemple -18 °C).

15. Appareil électrique ménager selon l'une au moins des revendications précédentes, caractérisé par le fait qu'il comprend trois indicateurs lumineux fonctionnels, un indicateur rouge (13), un indicateur vert (14) et un indicateur jaune (15).

16. Appareil électrique ménager selon la revendication 3, caractérisé par le fait que l'indication d'alarme est obtenue par clignotement simultané des trois indicateurs du fonctionnement du réfrigérateur (13, 14, 15).

17. Appareil électrique ménager selon la revendication 5, caractérisé par le fait que chaque chiffre du code de panne est affiché par clignotement, répété un certain nombre de fois égal au chiffre, de l'un des trois indicateurs du fonctionnement du réfrigérateur (13, 14, 15),

18. Appareil électrique ménager selon l'une au moins des revendications précédentes, caractérisé par le fait que le dispositif (11) de réglage de température comporte un puissancemètre de type linéaire, parfois appelé curseur (11).

19. Appareil électrique ménager selon l'une au moins des revendications précédentes, caractérisé par le fait que le dispositif de commande (7) est un microcontrôleur.

20. Appareil électrique ménager selon la revendication 8, caractérisé par le fait que le dispositif de commande (7) est destiné à activer le compresseur (10) en fonction de l'information transmise par le capteur externe (5a) et d'après les tables contenues dans la mémoire permanente, et à commander le fait que la température interne du premier compartiment (6) reste égale ou inférieure à celle qui est établie par le dispositif (11) de réglage de température.

21. Appareil électrique ménager selon l'une au moins des revendications précédentes, caractérisé par le fait que la mémoire permanente associée au dispositif de commande (7) est au moins en partie du type à lecture uniquement (EEPROM), afin qu'elle puisse mémoriser des données de fonctionnement et les communiquer sur demande.

22. Appareil électrique ménager selon l'une au moins des revendications précédentes, caractérisé par le fait qu'il comprend une touche (12) de commande du début d'une phase de congélation rapide et un indicateur lumineux (14).

23. Appareil électrique ménager selon les revendications 9 et 22, caractérisé par le fait que la phase de congélation rapide commence par un dégivrage du second compartiment (4), et l'indicateur lumineux (14) commence à clignoter avec le début du dégivrage et passe à un état d'éclairage continu uniquement à la fin du dégivrage et après au'un intervalle déterminé de temps s'est écoulé après l'activation du compresseur (10), cet intervalle étant suffisant pour permettre au second compartiment (4) de récupérer le niveau normal de froid.

24. Appareil électrique ménager selon la revendication 10, caractérisé en ce qu'il comprend :
- un circuit de réfrigération comprenant le compresseur (10), le premier (8b) et le second (2) évaporateur respectivement placés dans le premier (6) et le second (4) compartiment, et un condenseur,
- les quatre capteurs de température (5a, 9, 8, 4a),
si bien que le dispositif de commande (7) assure l'élaboration continue de l'information des quatre capteurs (9, 8, 4a, 5a) et du dispositif de régulation manuelle (11), et la commande des temps d'activation du compresseur (10) et de l'élément de chauffage (6a) afin que la température du premier compartiment (6), établie par le dispositif de régulation manuelle (11), soit maintenue de manière pratiquement stable et invariable indépendamment de la valeur de la température extérieure, et que la température maintenue dans le second compartiment (4) soit simultanément inférieure à une valeur de température préalablement fixée (par exemple -18 °C).

25. Appareil électrique ménager selon la revendication 1, caractérisé par le fait que, dans la mémoire permanente, des tables indiquant la valeur optimale des paramètres de référence de la régulation de température sont aussi contenues.

26. Appareil électrique ménager selon la revendication 25, caractérisé par le fait que les paramètres de référence de la régulation comprennent le seuil d'étalonnage utilisé pour la régulation thermostatique du réfrigérateur.

27. Appareil électrique ménager selon les revendications 19 et 26, caractérisé par le fait que le microcontrôleur peut exécuter une correction dynamique du seuil de température pour l'arrêt du compresseur afin que, à la suite de variations de la température extérieure, une température interne constante du réfrigérateur soit toujours garantie.
